# DEMANDE DE BREVET EUROPEEN

(11) **EP 4 389 660 A1**
(43) Date de publication de la demande: **26.06.2024**
(21) Numéro de dépôt: 23219321.9
(22) Date de dépôt: 21.12.2023
(51) Int. Cl.: B65G 61/00, B65G 57/24, B65G 57/10, B65G 57/03

(54) **SYSTÈME DE TRANSFERT DE PRODUITS**

(30) Priorité: 22.12.2022 FR 2214282
(71) Demandeur: Alfi Technologies, 49110 Beaupreau-en-Mauges (FR)
(72) Inventeur: JAUBERT, Yann, 78000 VERSAILLES (FR); LIMOUSIN, Laurent, 49170 LA POSSONNIERE (FR)
(74) Mandataire: Ipsilon

(57) **Abrégé**

Un système de transfert (110) de produits depuis une zone d'entrée (116) vers une zone de stockage (114) desdits produits, ledit système comportant :
- un dispositif de transfert (130) d'un ou plusieurs produits (104) provenant d'une zone d'entrée (116), et
- un dispositif d'évacuation (170) sur lequel sont déchargés lesdits un ou plusieurs produits (104) provenant du dispositif de transfert (130),
le dispositif de transfert (130) étant configuré pour se positionner, d'une part, à un premier niveau de réception (N1) dans lequel lesdits un ou plusieurs produits (104) viennent s'accumuler sur ledit dispositif de transfert (130) de manière à former un premier ensemble de produits (106), et, d'autre part un deuxième niveau de transfert (N2) dans lequel ledit premier ensemble de produits (106) est transféré sur le dispositif d'évacuation (170).

## Description

### Domaine technique

La présente invention concerne un système de transfert de produits depuis une zone de fabrication vers une zone de stockage ainsi qu'un procédé de transfert desdits produits au moyen dudit système.

### Arrière-plan technologique

La production d'isolants en fibres minérales comme la laine de verre ou la laine de roche consiste à fabriquer un matelas continu de fibres minérales qui est ensuite séché dans une étuve de polymérisation.

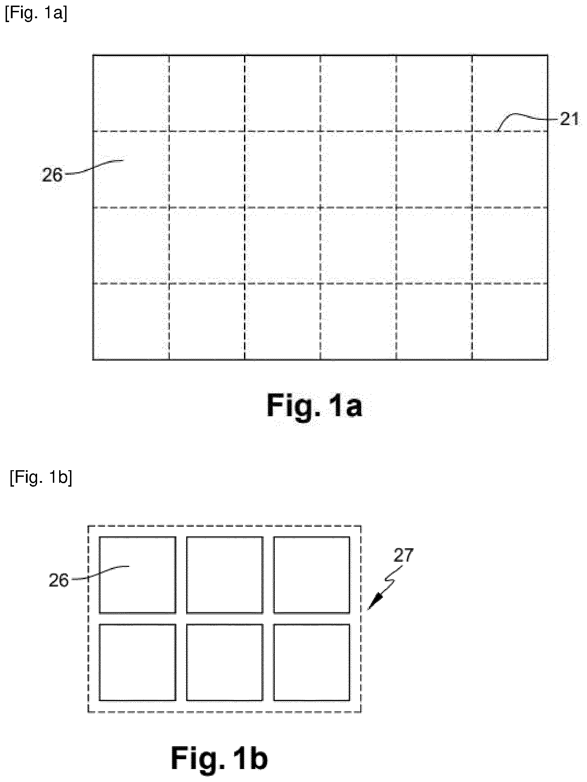

Un exemple de matelas ainsi formé est représenté à la figure 1a. Comme illustré, le matelas forme une nappe 21 se présentant sous la forme d'une bande sensiblement continue arrivant d'une zone de fabrication. Cette nappe 21 est ensuite découpée en panneaux 26 de plus petites tailles qui sont alors empilés puis stockés pour être commercialisés. Ces panneaux 26 seront par la suite dénommés produits. Lesdits produits 26 peuvent être de même dimension ou de dimension variable. Ces panneaux ou produits 26 sont ensuite regroupés en couches 27 pour être empilés les uns sur les autres, comme illustré à la figure 1b.

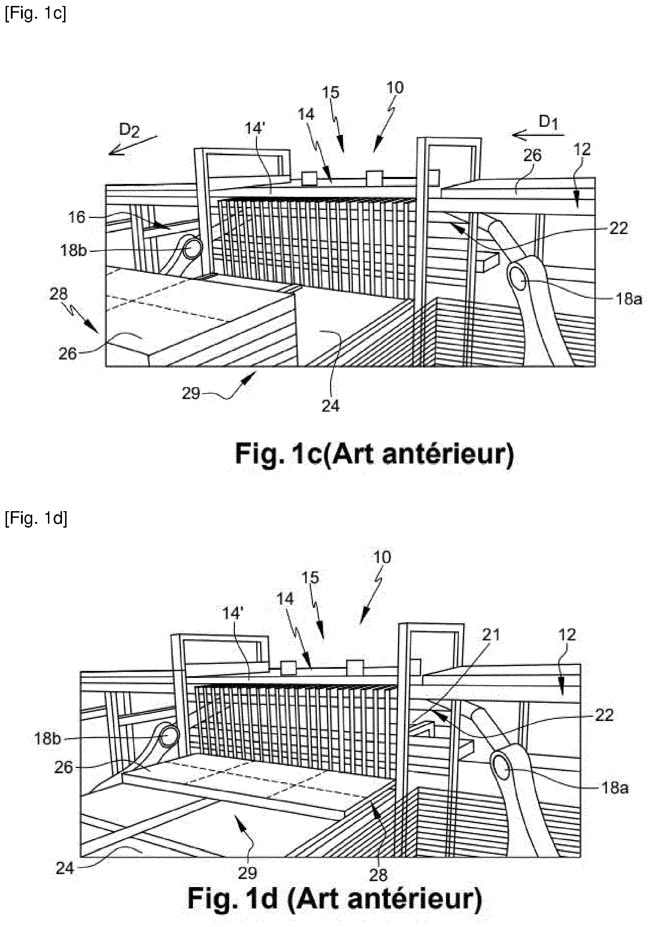

L'empilement des produits est réalisé au moyen d'un système de transfert et d'assemblage 10 tel que celui illustré sur les figures 1c et 1d. Ce système 10 comprend un premier convoyeur 12 qui reçoit des produits 26 obtenus suite à la découpe de la nappe en fibres minérales et qui les achemine vers une zone dans laquelle ils vont être empilés.

En particulier, le premier convoyeur 12 permet de déplacer les produits 26 regroupés en couche 27 dans une première direction D1 et ce, depuis une zone de découpe non représentée vers une zone de transition 15. Dans cette zone de transition 15, l'ensemble de produits 26 est stoppé sur une première plateforme 14 formé par une pluralité de premiers éléments longitudinaux 14' s'étendant dans une direction D2 perpendiculaire à la direction D1. L'ensemble de produits 26 est alors déplacé au moyen d'un système de transfert 16 vers un deuxième convoyeur 24.

Le système de transfert 16 comporte une plateforme de transfert 22 comprenant une pluralité de deuxièmes éléments longitudinaux 21 s'étendant dans un plan horizontal et reliés par une traverse 20. La plateforme de transfert 22 est mise en mouvement au moyen de deux robots 18a et 18b qui maintiennent la plateforme 22 à partir de chacune des extrémités de la traverse 20.

Lors de la mise en mouvement de la plateforme de transfert 22 au moyen des robots 18a et 18b, les deuxièmes éléments longitudinaux 21 passent entre les premiers éléments longitudinaux 14' puis au-dessus du plan de la première plateforme 14. La plateforme de transfert 22 peut ainsi soulever les couches 27 puis les déposer sur le deuxième convoyeur 24 au niveau d'une zone de réception 29.

Cette opération est répétée plusieurs fois de manière à former une pile 28 de couches 27 sur la zone de réception 29, la pile 28 étant ensuite évacuée au moyen du deuxième convoyeur 24 vers une zone de stockage non représentée.

Un inconvénient de ce dispositif est que, le temps que la pile 28 soit évacuée, la zone de réception 29 n'est pas libérée et les couches 27 situées sur la première plateforme 14 ne peuvent pas être transférées sur le deuxième convoyeur 24. Les couches 27 sont alors mises en attente sur la première plateforme 14 en attendant que la zone de réception 29 soit libre. Cette mise en attente entraine une interruption dans le procédé de transfert et ce, à chaque fois qu'une pile doit être évacuée. Cet inconvénient existe quel que soit le type de produits (produit plan à empiler, colis à rassembler...) nécessitant l'accumulation des produits sur une zone tampon ou l'arrêt de la fabrication ce qui n'est pas possible.

Un besoin existe donc de développer un système permettant d'optimiser le transfert et l'assemblages de produits, notamment de produits acheminés de manière continue, et en particulier un système permettant d'éviter tout ralentissement ou toute interruption dans le procédé de transfert et d'assemblage.

### Résumé de l'invention

L'invention a pour premier objet un système de transfert de produits depuis une zone d'entrée vers une zone de stockage desdits produits, ledit système comportant :
- un dispositif de transfert d'un ou plusieurs produits provenant d'une zone d'entrée, et
- un dispositif d'évacuation sur lequel sont déchargés lesdits un ou plusieurs produits provenant du dispositif de transfert,

le dispositif de transfert étant configuré pour se positionner, d'une part, à un premier niveau de réception dans lequel lesdits un ou plusieurs produits viennent s'accumuler sur ledit dispositif de transfert de manière à former un premier ensemble de produits, et, d'autre part un deuxième niveau de transfert dans lequel ledit premier ensemble de produits est transféré sur le dispositif d'évacuation,
le dispositif de transfert étant également configuré pour pouvoir passer du deuxième niveau de transfert au premier niveau de réception pendant qu'un ou plusieurs produits continuent de s'accumuler sur le premier ensemble et ce, de façon à former un ensemble final,
le dispositif d'évacuation étant configuré pour acheminer ledit ensemble final vers une zone de stockage une fois que le dispositif de transfert s'est repositionné au premier niveau de réception.

Comme mentionné précédemment, par *« nappe* », on entend une bande sensiblement continue, notamment en fibres minérales comme la laine de verre ou la laine de roche, arrivant de la zone de fabrication.

Par « *produit »,* on entend un panneau obtenu par découpage de ladite nappe.

Une « *couche* », désigne un produit ou un regroupement de produits. La couche peut comporter au moins un produit, mieux au moins deux produits.

Le système de transfert selon l'invention permet de pouvoir transférer les produits et de les assembler de manière continue en évitant toute interruption et tout ralentissement du procédé.

Ceci est permis grâce au dispositif de transfert qui est configuré pour pouvoir se replacer dans sa position initiale, c'est-à-dire au premier niveau de réception, après avoir transféré le premier ensemble de produits sur le dispositif d'évacuation, et ce, alors que les produits continuent d'être acheminés pour compléter le premier ensemble. Le transfert des produits afin de former des couches pouvant ensuite être stockées est ainsi optimisé puisqu'il est mis en oeuvre de façon continue contrairement aux systèmes de l'art antérieur.

Selon un mode de réalisation préféré, le système de transfert selon l'invention peut s'appliquer à des nappes de fibres minérales qui peuvent être découpées en produits afin que ces produits soient empilés par unité ou par groupe de produits, encore appelé couche, de manière à former respectivement une pile comprenant un produit à chaque niveau ou une pile comprenant plusieurs produits regroupés en couche à chaque niveau.

Cependant, l'invention n'est pas limitée à ce mode de réalisation préféré et peut, au contraire, s'appliquer à tout type de produits pouvant être empilés ou encore regroupés de façon ordonnée ou au contraire en vrac.

Le premier niveau de réception et le deuxième niveau de déchargement s'étendent selon un axe z et sont chacun à une hauteur différente le long de cet axe, le premier niveau de réception étant de préférence à une hauteur plus élevée que le deuxième niveau de transfert.

Selon des modes de réalisation possibles pris seuls ou en combinaison:
- le dispositif de transfert est configuré pour pouvoir se positionner à une pluralité de niveaux intermédiaires entre le premier niveau de réception et le deuxième niveau de transfert et ce, au fur et à mesure de l'accumulation des produits ou des couches de produits ; ainsi, le dispositif de transfert adapte son niveau à la quantité de produits qu'il contient et à l'épaisseur de ces derniers et se rapproche peu à peu du deuxième niveau de transfert ; selon un mode de réalisation préféré, le premier niveau de réception est situé à une hauteur plus élevée que le deuxième niveau de transfert et le dispositif de transfert descend au fur et à mesure que les produits ou les couches de produits s'accumulent permettant à la surface de l'ensemble se formant sur le dispositif de transfert de rester approximativement au premier niveau de réception alors que le dispositif de transfert se rapproche peu à peu du deuxième niveau de transfert ;
- le dispositif de transfert comporte une plateforme de réception sur laquelle peuvent s'accumuler lesdits un ou plusieurs produits provenant de la zone d'entrée ; la plateforme de réception forme ainsi un support stable pour accueillir les produits, notamment lorsqu'ils sont regroupés de manière ordonnée, en couche, par exemple empilés ;
- le dispositif d'évacuation comporte une plateforme d'évacuation s'étendant à un troisième niveau de déchargement, la plateforme de réception étant configurée pour pouvoir se positionner alternativement au-dessus et au-dessous dudit troisième niveau de déchargement ; ainsi, la plateforme de réception peut recevoir les produits ou les couches de produits lorsqu'elle est positionnée au-dessus du troisième niveau de déchargement, puis déposer les produits ou les couches de produits sur la plateforme d'évacuation lorsqu'elle vient se positionner au-dessous de cette dernière ; la plateforme de réception et la plateforme d'évacuation s'étendent de préférence dans des plans parallèles l'un à l'autre, de préférence dans des plans horizontaux ;
- la plateforme de réception est formée d'une pluralité de premiers éléments longitudinaux et la plateforme d'évacuation est formée d'une pluralité de deuxièmes éléments longitudinaux, les premiers éléments longitudinaux étant configurés pour pouvoir passer entre les deuxièmes éléments longitudinaux lorsque la plateforme de réception passe alternativement au-dessus et au-dessous du troisième niveau de déchargement ; de cette manière, la plateforme de réception peut passer alternativement au-dessus et au-dessous de la plateforme d'évacuation en passant au travers de cette dernière ; ainsi les produits ou les couches de produits qui étaient supportés par les premiers éléments longitudinaux sont portés par les deuxièmes éléments longitudinaux dès que la plateforme de réception s'est positionnée au deuxième niveau de transfert, sous le troisième niveau de déchargement ;
- le dispositif de transfert comporte au moins un élément de blocage formant une butée pour les produits ou les couches de produits s'accumulant sur le dispositif de transfert ; ledit au moins un élément de blocage peut permettre d'éviter que les produits ne tombent du dispositif de transfert, de circonscrire l'ensemble de produits ou de couches de produits dans un espace défini sur le dispositif de transfert ou encore d'aligner les produits ; de préférence, le dispositif de transfert comporte de un à trois éléments de blocage ; ledit au moins un élément de blocage peut être, par exemple, une paroi ou un rebord s'étendant selon un plan vertical ;
- le dispositif de transfert est mis en mouvement au moyen de deux robots positionnés de part et d'autre du dispositif de transfert ; l'utilisation des deux robots permet un déplacement du dispositif de réception automatisé ; et
- le système de transfert comprend en outre un dispositif d'acheminement des produits depuis une zone de fabrication vers la zone d'entrée.

Le système de transfert peut comporter un dispositif de transition agencé pour déposer les produits sur la plateforme de réception, ledit dispositif de transition comportant une pluralité de quatrième éléments longitudinaux parallèles les uns aux autres, lesdits quatrième éléments longitudinaux comportant une extrémité libre et une extrémité opposée sur laquelle les produits viennent en appui lors de leur acheminement vers la plateforme de réception.

L'invention a également pour objet un procédé de transfert de produits depuis une zone d'entrée vers une zone de stockage desdits produits, ledit procédé étant mis en oeuvre au moyen du système de transfert tel que celui précédemment décrit, caractérisé en ce qu'il comprend au moins les étapes suivantes :
- placer le dispositif de transfert au premier niveau de réception et transférer un ou plusieurs produits de la zone d'entrée vers le dispositif de transfert pour former un premier ensemble de produits,
- placer le dispositif de transfert au deuxième niveau de transfert et transférer le premier ensemble de produits sur le dispositif d'évacuation,
- replacer le dispositif de transfert au premier niveau de réception tout en poursuivant le transfert d'un ou plusieurs produits de la zone d'entrée vers le premier ensemble de manière à former un ensemble final, et
- évacuer l'ensemble final vers la zone de stockage une fois que le dispositif de transfert s'est replacé au premier niveau de réception.

Le procédé de transfert des produits est optimisé puisque le transfert des produits peut être poursuivi pendant que le dispositif de transfert se repositionne au premier niveau de réception N1 et également durant l'évacuation de l'ensemble final vers la zone de stockage.

Selon un mode de réalisation possible, le procédé comporte l'étape d'acheminer les produits depuis une zone de fabrication vers la zone d'entrée.

### Brève description des figures

La description qui va suivre en regard des dessins annexés, donnés à titre d'exemples non limitatifs, fera bien comprendre en quoi consiste l'invention et comment elle peut être réalisée. Sur les figures annexées :
[fig. 1a] La figure 1a représente schématiquement une nappe continue découpée en une pluralité de produits ;
[fig. 1b] La figure 1b est un exemple d'une couche de produits de dimensions variables constituées de un ou plusieurs produits;
[fig. 1c] La figure 1c est une vue schématique en perspective d'un système de transfert de produits de l'art antérieur au début de l'empilement de couches ;
[fig. 1d] La figure 1d est une vue schématique en perspective du système de transfert de produit de la figure 1a au stade de l'évacuation de la pile de couches formée ;
[fig. 2a] La figure 2a est une vue schématique en perspective et de dessus d'un système de transfert selon un mode de réalisation de l'invention à un premier stade du procédé ;
[fig. 2b] La figure 2b est une vue schématique en perspective et de dessus d'un système de transfert selon un mode de réalisation de l'invention à un deuxième stade du procédé ;
[fig. 2c] La figure 2c est une vue schématique en perspective et de dessus d'un système de transfert selon un mode de réalisation de l'invention à un troisième stade du procédé ;
[fig. 2d] La figure 2d est une vue schématique en perspective et de dessus d'un système de transfert selon un mode de réalisation de l'invention à un quatrième stade du procédé ;
[fig. 2e] La figure 2e est une vue schématique en perspective et de dessus d'un système de transfert selon un mode de réalisation de l'invention à un cinquième stade du procédé ;
[fig. 2f] La figure 2f est une vue schématique en perspective et de dessus des dispositifs de transition et de dispositif selon l'invention ;
[fig. 3a], [fig. 3b], [fig. 3c] et [fig. 3d] Les figures 3a à 3d illustrent différentes étapes d'un procédé de transfert selon l'invention ;
[fig. 4] La figure 4 représente isolément un dispositif de transfert selon l'invention, et

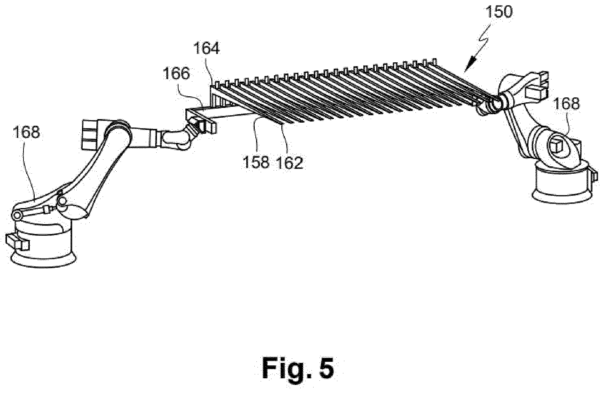

[fig. 5] La figure 5 représente isolément un dispositif de transition selon l'invention.

### Description de mode(s) de réalisation

Dans les figures, et à moins qu'il n'en soit disposé autrement, les éléments identiques porteront les mêmes signes de référence.

Par ailleurs, le système de transfert va être décrit dans sa position d'utilisation, c'est-à-dire posé sur le sol, et les termes du type « dessus », « dessous », « vertical », « horizontal » se rapportent au système de transfert dans cette position.

Les figures 1a et 1b décrivant un exemple de nappe découpée en produits ainsi qu'un exemple de couche obtenue par regroupement des produits précités ont déjà été décrites dans la partie introductive.

De même, les figures 1c et 1d décrivant un système de l'art antérieur ont déjà été décrites dans la partie introductive.

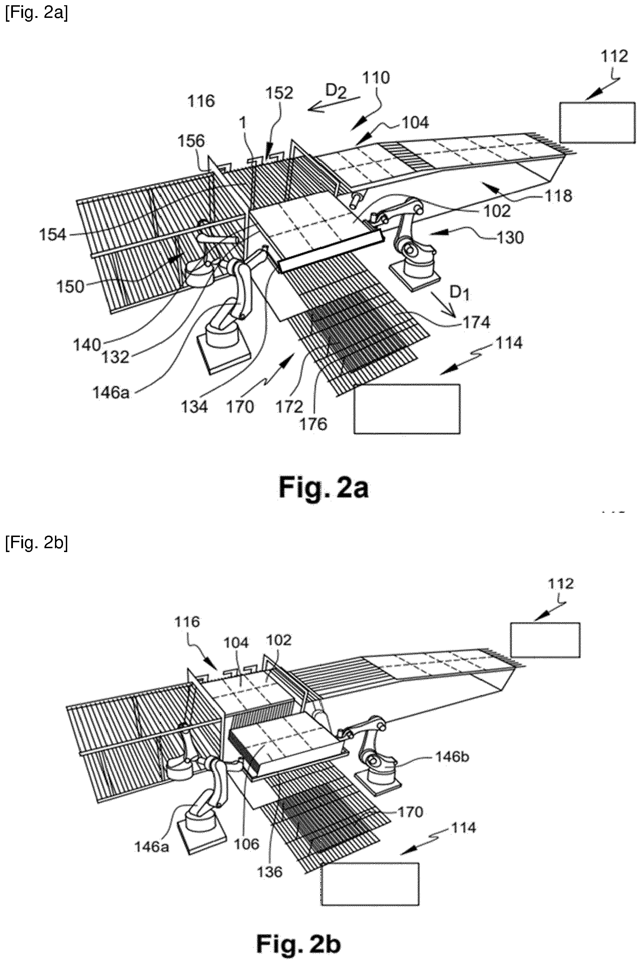

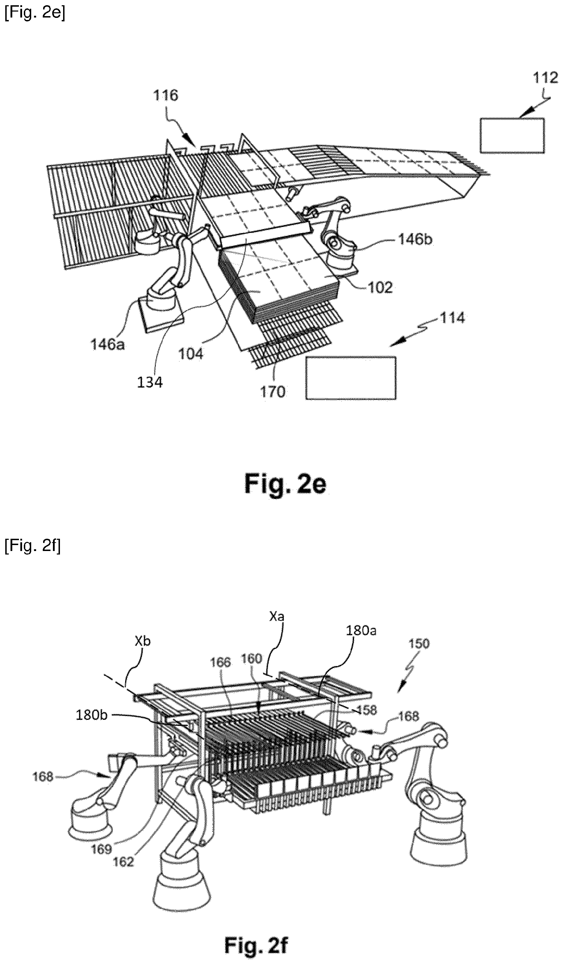

Un système de transfert 110 selon un mode de réalisation de l'invention va être décrit en référence aux figures 2a à 2f.

Selon ce mode de réalisation, le système de transfert 110 est utilisé pour transférer des produits en fibres minérales 102 depuis une zone d'entrée 116 vers une zone de stockage 114. Dans ce mode de réalisation, les produits 102 sont regroupées en couches 104, une couche 104 comprenant un ou plusieurs, et par exemple six produits 102 juxtaposés bords à bords.

Dans l'exemple illustré, la couche 104 comporte plusieurs rangées juxtaposées, chaque rangée comportant elle-même un ou plusieurs produits également juxtaposés. Comme illustré, chaque produit d'une même couche est juxtaposé à un autre produit de cette couche par au moins un bord, et peut être juxtaposé à deux produits de ladite couche respectivement par deux bords distincts.

Selon d'autres modes de réalisation possibles, le système peut s'appliquer à des couches comprenant une pluralité de produits agencés de différentes façons, sans pour autant limiter la disposition, un même bord d'un produit pouvant par exemple être adjacent à un ou plusieurs bords de produits de cette même couche.

Dans l'exemple illustré, les couches 104 comportent chacune six produits. On ne sort pas du cadre de l'invention si le système de transfert 110 est utilisé pour transférer des produits 102 un par un depuis la zone d'entrée 116 vers la zone de stockage 114. Autrement dit, la couche peut correspondre à un seul produit.

Le système de transfert 110 comporte un dispositif de transfert 130 permettant de transférer un ou plusieurs produits 102 depuis la zone d'entrée 116 vers la zone de stockage 114. Dans l'exemple illustré, le dispositif de transfert 130 est configuré pour transférer les produits 102 ensemble sous la forme d'une même couche 104. Le système de transfert 110 comporte également un dispositif d'évacuation 170 sur lequel sont déchargées les produits 102 et le cas échéant les couches 104 provenant successivement du dispositif de transfert 130. Le système de transfert 110 peut être également configuré pour transférer les produits 102 un par un, comme mentionné plus haut.

Le dispositif de transfert 130 est configuré pour se positionner tout d'abord à un premier niveau de réception N1, dans lequel il reçoit successivement des couches de produits 104 provenant de la zone d'entrée 116. Les couches de produits 104 viennent alors s'accumuler sur le dispositif de transfert 130 en formant un ensemble de produits 106 qui est, dans ce mode de réalisation, une pile intermédiaire 106 comportant plusieurs couches 104 comme illustré en particulier sur la figure 2b.

Le dispositif de transfert 130 est également configuré pour se positionner à un deuxième niveau de transfert N2 différent du premier niveau N1 dans lequel la pile intermédiaire 106 est transférée sur le dispositif d'évacuation 170.

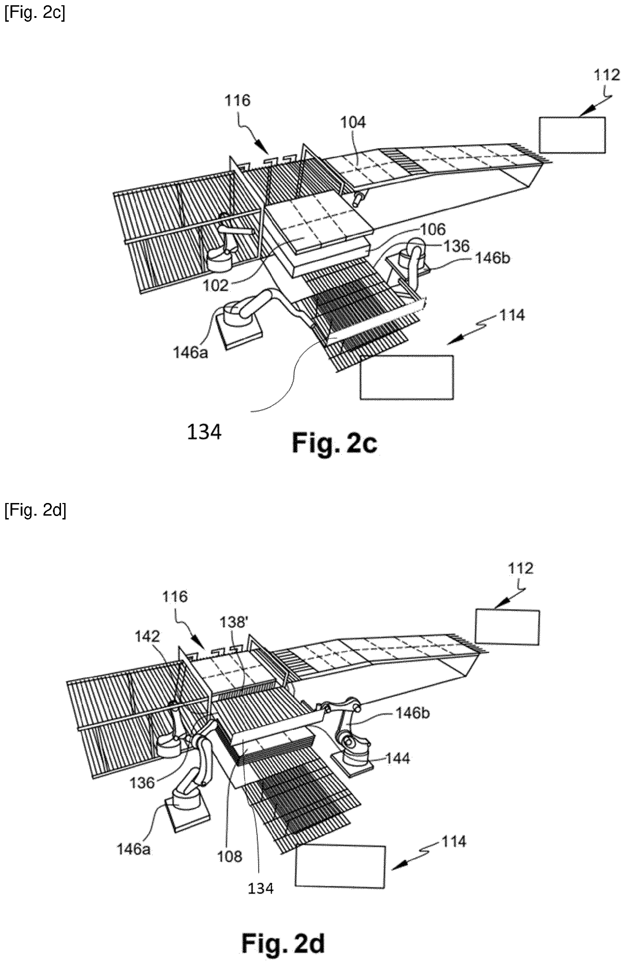

Le dispositif de transfert 130 est configuré pour pouvoir se repositionner au premier niveau de réception N1 une fois que la pile intermédiaire 106 a été transférée sur le dispositif d'évacuation 170 et ce, alors qu'une ou plusieurs plaque(s) 104 peu(ven)t être déposée(s) sur la pile intermédiaire 106 pour former une pile finale 108, comme illustré notamment à la figure 2c.

Une fois que le dispositif 130 s'est repositionné au premier niveau de réception N1, le dispositif d'évacuation 170 achemine la pile finale 108 vers la zone de stockage 114 et ce, alors que le dispositif de transfert 130 peut de nouveau recevoir des plaques 104 provenant de la zone d'entrée 116 de manière à former une nouvelle pile intermédiaire 106.

Le système de transfert 110 permet ainsi de pouvoir empiler des couches 104 pour former puis déplacer des piles finales 108 de manière optimisée et sans arrêter la chaîne de transfert. En effet, lorsqu'une pile intermédiaire 106 a été formée, elle est transférée sur le dispositif d'évacuation 170 et, le temps que le dispositif de transfert 130 se replace au niveau N1, une ou plusieurs couche(s) 104 peuvent continuer à être accumulées sur la pile intermédiaire 106 de façon à former la pile finale 108. Par ailleurs, l'évacuation de la pile finale 108 est effectuée une fois que le dispositif de transfert 130 s'est replacé au niveau N1 ce qui permet au dispositif de transfert 130 de pouvoir de nouveau recevoir des plaques 104 pour former une nouvelle pile, et ce, simultanément avec l'évacuation de la pile finale 108.

Le processus d'empilement est ainsi optimisé puisqu'il n'est pas nécessaire de l'interrompre pour les phases de transfert de la pile sur le dispositif d'évacuation, le repositionnement du dispositif de transfert dans sa position initiale est réalisé en temps masqué pour permettre l'évacuation de la pile finale.

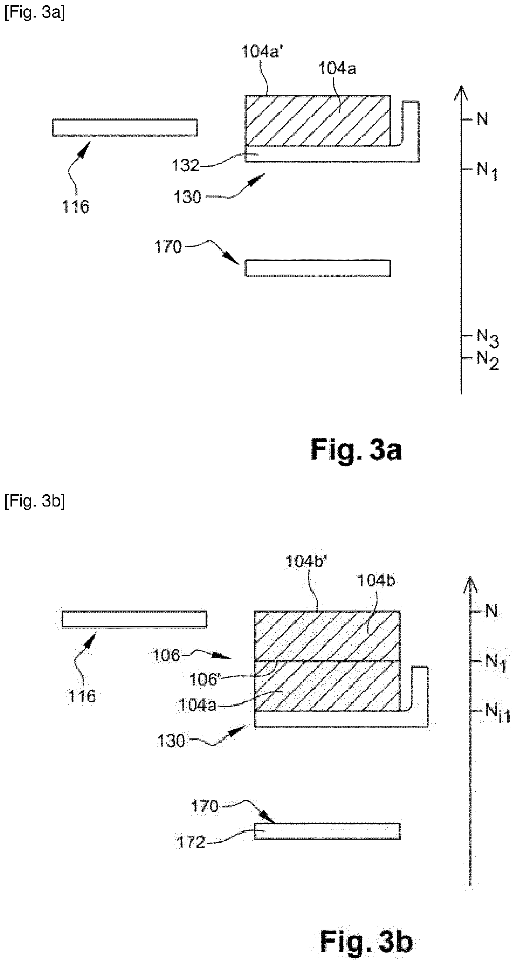

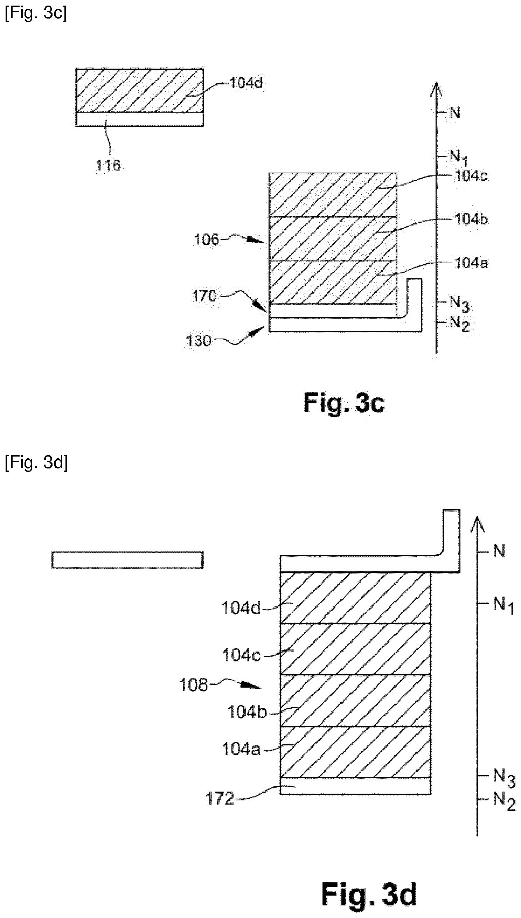

Dans ce mode de réalisation, le dispositif de transfert 130 peut se positionner progressivement à différents niveaux intermédiaires Ni entre le premier niveau de réception N1 et le deuxième niveau de transfert N2. En particulier, le dispositif de transfert descend graduellement à chaque fois qu'il reçoit une couche 104. Ainsi, comme illustré sur les figures 3a à 3d, lorsque le dispositif de transfert 130 ne comporte encore aucune couche, il est positionné au niveau N1 et, à chaque fois qu'une plaque 104 est déposée, le dispositif de transfert 130 descend de manière à ce qu'une surface supérieure 104' de la dernière couche 104 déposée se trouve au niveau N1. Le dispositif de transfert 130 descend ainsi du niveau N1 au niveau N2 au fur et à mesure de l'accumulation des couches 104. L'amplitude de descente de la plateforme est avantageusement associée à l'épaisseur du produit constituant les couches empilées. Cette amplitude est de préférence corrigée par une détection physique de la surface supérieure de la couche pour permettre une prise en compte de l'écrasement du produit, cet écrasement dépendant au moins de la densité du produit.

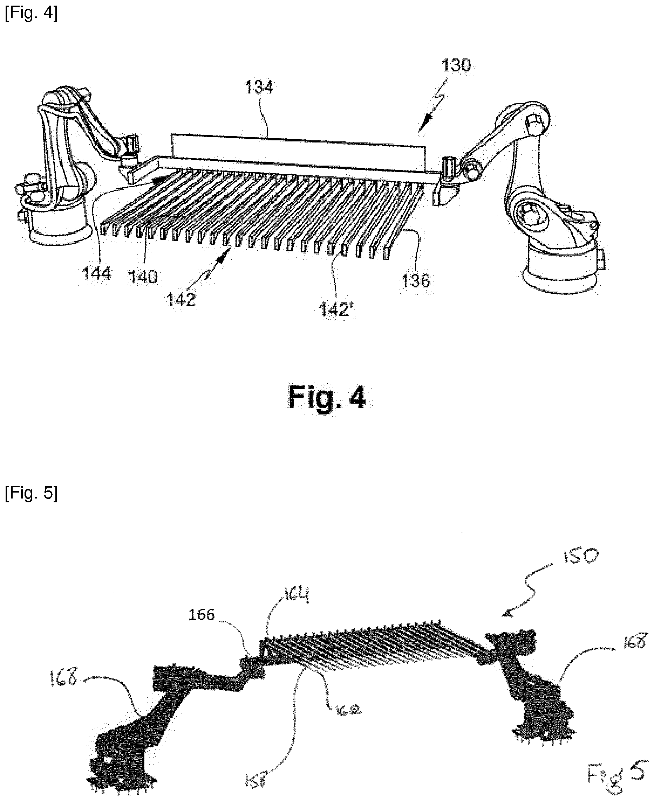

Comme illustré à la figure 4, le dispositif de transfert 130 comporte une plateforme de réception 132 sur laquelle sont empilées successivement les couches 104 provenant de la zone d'entrée 116. La plateforme de réception 132 est plane de manière à ce que la pile intermédiaire 106 soit stable et ce, jusqu'à son transfert sur le dispositif d'évacuation 170. Dans l'exemple illustré, la plateforme de réception 132 présente une forme générale rectangulaire.

La plateforme de réception 132 est formée d'une pluralité de premiers éléments longitudinaux 140 s'étendant dans une direction D1. Les premiers éléments longitudinaux 140 sont notamment alignés les uns par rapport aux autres. Les deux éléments longitudinaux 140 situés aux extrémités opposées délimitent respectivement les bords latéraux 136 de la plateforme de réception 132. Les premiers éléments longitudinaux 140 comportent chacun une extrémité libre 142 et une extrémité opposée 144 qui est fixée à la bordure 134. La pluralité d'extrémités libres 142 qui ne sont pas reliées entre elles forme un premier bord longitudinal 138' de la plateforme de réception.

Par ailleurs, le dispositif de transfert 130 comporte une bordure 134 qui s'étend sur sensiblement toute la longueur de la plateforme de réception 132, délimitant ainsi un deuxième bord longitudinal opposé au premier bord longitudinal 138'. Cette bordure 134 forme, comme illustré, une butée permettant aux couches 104 de rester en place sur le dispositif de transfert 130 et de s'empiler de manière alignée.

Deux robots 146a et 146b sont positionnés de part et d'autre du dispositif de transfert 130 permettant de le mettre en mouvement et notamment par la mise en mouvement de la plateforme de réception 132. Les deux robots 146a-b permettent en particulier de maintenir la plateforme de réception 132 au niveau N1, au niveau N2, ou à des niveaux intermédiaires Ni, ou encore de la déplacer d'un niveau à un autre. Pour cela, les deux robots 146a-b sont chacun connectés à un bord latéral 136 de la plateforme de réception 132. Les robots 146a-b sont de préférence automatisés.

Le dispositif d'évacuation 170 comporte une plateforme d'évacuation 172 qui s'étend horizontalement à un niveau de déchargement N3 qui est situé entre le niveau de réception N1 et le niveau de transfert N2. La plateforme de réception 132 est configurée pour pouvoir se positionner alternativement au-dessus et au-dessous dudit troisième niveau de déchargement N3 de manière à déposer la pile intermédiaire 106 sur la plateforme d'évacuation 172.

En particulier, la plateforme d'évacuation 172 est formée d'une pluralité de deuxièmes éléments longitudinaux 174 qui s'étendent dans la direction D1 et entre lesquels peuvent passer les premiers éléments longitudinaux 140 de manière à ce que la plateforme de réception 132 puisse passer au-dessus et au-dessous de la plateforme d'évacuation 172 et ce, en effectuant un mouvement selon une direction sensiblement verticale.

La bordure 134 est surélevée par rapport au plan formé par les premiers éléments longitudinaux 140 et reste ainsi au-dessus de la plateforme d'évacuation 172 et ce, même lorsque les premiers éléments longitudinaux 140 passent sous ladite plateforme.

Dans l'exemple illustré, la plateforme d'évacuation 172 est un convoyeur agencé pour acheminer les couches 104 selon la direction D1 vers la zone de stockage 114. Dans cet exemple, les deuxièmes éléments longitudinaux 174 correspondent à des courroies disposées parallèlement à la direction D1.

Le système 110 comporte également des moyens permettant le référencement longitudinal des produits 104. Lesdits moyens comportent des butées 180a et 180b. Les butées 180a et 180b sont de préférence amovibles. Les butées 180a et 180b sont mobiles en pivotement autour des axes Xa et Xb, respectivement. En outre, la butée 180a est mobile en translation selon une direction parallèle à D2 pour venir en appui du produit 104 et donc maintenir ce dernier entre les butées 180a et 180b. En outre, la butée 180b est mobile en pivotement autour de l'axe Xb entre une première position dans laquelle elle vient en appui du produit 104 et une deuxième position dite d'escamotage permettant par exemple le déplacement d'un produit défectueux en dehors du système de transfert.

Le système 110 comporte également un dispositif d'acheminement 118 qui est un convoyeur et qui achemine les couches 104 selon une direction D2 perpendiculaire à la direction D1 depuis une zone de fabrication 112 vers la zone d'entrée 116. La zone d'entrée 116 est une zone de transition à partir de laquelle les plaques 104 sont déplacées vers le dispositif de transfert 130.

Dans la zone d'entrée 116 est situé un dispositif de transition 150 ainsi qu'une plateforme de transition 152 qui reçoit les couches 104 provenant du convoyeur 118. La plateforme de transition 152 est formée d'une pluralité de troisièmes éléments longitudinaux 154 qui s'étendent selon la direction D1 et à un niveau de transition N situé au-dessus du niveau N1, comme cela est visible notamment aux figures 3a-d. Lorsque les couches 104 arrivent dans la zone d'entrée 116 et sur la plateforme de transition 152, leur déplacement dans la direction D2 est stoppé par une butée 156.

Le dispositif de transition 150 a une forme et un fonctionnement similaire au dispositif de transfert 130. Comme cela est visible sur la figure 2e notamment, Il est situé sous la plateforme de transition 152 et comporte une pluralité de quatrièmes éléments longitudinaux 158 parallèles les uns aux autres et s'étendant selon la direction D1 de façon à former un plateau 160. Les quatrièmes éléments longitudinaux 158 sont configurés pour pouvoir passer entre les troisièmes éléments longitudinaux 154 de manière à pouvoir passer alternativement au-dessus et au-dessous du plan de la plateforme de transition 152.

Les quatrième éléments longitudinaux 158 possèdent une extrémité libre 162 et une extrémité opposée 164 par laquelle ils sont tous reliés à une traverse 166. La traverse 166 s'étend sous le plan formé par les quatrièmes éléments longitudinaux 158 et reste toujours en moins en partie au-dessous de la plateforme de transition 152 et ce, même lorsque les quatrièmes éléments longitudinaux 158 passent au-dessus du plan de cette dernière.

Le dispositif de transition 150 comporte également deux robots 168 qui sont fixés à des bords latéraux 169 du plateau 160 de façon à pouvoir le maintenir dans une position donnée et également le mettre en mouvement.

Le dispositif de transition 150 peut ainsi, par un mouvement globalement vertical et lorsque les quatrièmes éléments longitudinaux 158 passent au-dessus de la plateforme de transition 152, soulever la couche 104 positionnée sur la plateforme de transition 152, puis, par un mouvement globalement horizontal, déposer la couche 104 sur la plateforme de réception 132 ou sur une couche 104 déjà présente sur la plateforme de réception 132, l'une ou l'autre étant positionné au niveau N1.

Le système de transfert 110 permet de mettre en oeuvre un procédé de transfert des couches 104 depuis la zone d'entrée 116 vers la zone de stockage 114 selon un mode de réalisation du deuxième objet de l'invention. Ce procédé est illustré par les figures 3a à 3d. Dans ce mode de réalisation, le procédé comporte une étape préalable d'acheminement des couches 104 depuis une zone de fabrication 112 vers la zone d'entrée 116.

Ainsi, selon ce mode de réalisation, une première couche 104a est acheminée depuis sa zone de fabrication 112 vers la zone d'entrée 116 au moyen du dispositif d'acheminement 118. La couche est acheminée jusqu'à la plateforme de transition 152 sur laquelle son mouvement selon la direction D2 est stoppé par la butée 156.

A cette étape du procédé, le dispositif de transfert 130, et notamment une surface supérieure de la plateforme de réception 132, est positionné au premier niveau de réception N1 comme représenté sur la figure 2d. Les robots 168 soulèvent alors la première plaque 104a positionnée sur la plateforme de transition 152 puis la déposent sur la plateforme de réception 132 comme illustré sur la figure 3a. Le dépôt de la couche 104a sur la plateforme de réception 132 se fait par l'intermédiaire du dispositif de transition 150. Les quatrième éléments longitudinaux 158 effectuent un mouvement de translation vers la zone de réception 132 entrainant ainsi le déplacement de la couche 104. Lors du dépôt de la couche 104a, celle-ci est maintenue stable entre l'extrémité 164 des quatrième éléments longitudinaux 158 et la bordure 134 du dispositif de transfert 130.

La plateforme de réception 132 s'abaisse alors à un premier niveau intermédiaire Ni1 de manière à ce que la surface 104a' de la première couche 104a soit positionnée au niveau N1 de réception de manière à recevoir une deuxième plaque 104b qui, entre-temps a été acheminé vers la plateforme de transition 152.

La deuxième couche 104b est alors déposée sur la première couche 104a au moyen du dispositif de transition 150 comme précédemment décrit pour la première couche 104a et comme illustré sur la figure 3b. De la même manière, une troisième couche104c est ensuite déposée sur la deuxième couche 104b de manière à former la pile intermédiaire 106.

Comme représenté sur les figures 2b et 3c, le dispositif de transfert 130 se positionne alors au deuxième niveau de transfert N2 qui est situé sous la plateforme d'évacuation 172 permettant de déposer la pile intermédiaire 106 sur le dispositif d'évacuation 170, et notamment sur la plateforme d'évacuation 172.

Le dispositif de transfert 130 se replace alors dans sa position initiale au niveau N1 pendant qu'une quatrième couche 104d est placée sur la pile intermédiaire 106 de façon à former la pile finale 108 comme illustré sur la figure 2c. Le dépôt de la quatrième couche 104d se fait en maintenant celle-ci entre l'extrémité 164 des quatrièmes éléments longitudinaux et l'extrémité libre 142 des premiers éléments longitudinaux du dispositif de transfert 130. Le replacement au niveau N1 est par exemple effectué par un premier mouvement horizontal vers la zone de stockage 114, comme illustré à la figure 2c, suivi d'un mouvement vertical pour atteindre le niveau N1 ensuite d'un deuxième mouvement horizontal vers la zone de transition pour retrouver la position initiale du dispositif de transfert 130.

La pile finale 108 est alors évacuée au moyen du dispositif d'évacuation 170 vers la zone de stockage 114 et ce, alors que de nouvelles couches 104 continuent à être empilées sur la plateforme de réception 132 comme illustré sur la figure 2e de manière à former une nouvelle pile intermédiaire.

Le procédé mis en oeuvre au moyen du système de transfert 110 permet ainsi d'empiler les couches 104 de manière continue sans qu'il soit nécessaire d'interrompre le processus, comme c'est le cas dans l'art antérieur, le temps notamment d'évacuer une pile qui vient d'être formée.

L'étape de transfert des couches au moyen du dispositif de transition 150 est optionnelle et, selon un autre mode de réalisation possible, les couches peuvent être acheminées sur le dispositif de transfert 130 d'une autre manière, par exemple en étant acheminées directement par un convoyeur et être déposés sur le dispositif de transfert positionné en bout de course par rapport au convoyeur. Les couches pourraient également être déposées sur le dispositif de transfert directement par un opérateur.
Bien entendu, l'invention n'est pas limitée aux exemples qui viennent d'être décrits.

## Revendications

1. Système de transfert de produits (110) depuis une zone d'entrée (116) vers une zone de stockage (114) desdits produits, ledit système comportant :
- un dispositif de transfert (130) d'un ou plusieurs produits (102 ;104) provenant d'une zone d'entrée (116), et
- un dispositif d'évacuation (170) sur lequel sont déchargés lesdits un ou plusieurs produits (104) provenant du dispositif de transfert (130),
le dispositif de transfert (130) étant configuré pour se positionner, d'une part, à un premier niveau de réception (N1) dans lequel lesdits un ou plusieurs produits (102 ;104) viennent s'accumuler sur ledit dispositif de transfert (130) de manière à former un premier ensemble de produits (106), et, d'autre part un deuxième niveau de transfert (N2) dans lequel ledit premier ensemble de produits (106) est transféré sur le dispositif d'évacuation (170),
le dispositif de transfert (130) étant également configuré pour pouvoir passer du deuxième niveau de transfert (N2) au premier niveau de réception (N1) pendant qu'un ou plusieurs produits (102 ;104) continuent de s'accumuler sur le premier ensemble (106) et ce, de façon à former un ensemble final (108),
le dispositif d'évacuation (170) étant configuré pour acheminer ledit ensemble final (108) vers une zone de stockage (114) une fois que le dispositif de transfert (130) s'est repositionné au premier niveau de réception (N1).

2. Système de transfert selon la revendication 1, **caractérisé en ce que** le dispositif de transfert (130) est configuré pour pouvoir se positionner à une pluralité de niveaux intermédiaires (Ni) entre le premier niveau de réception (N1) et le deuxième niveau de transfert (N2) et ce, au fur et à mesure de l'accumulation des produits (102 ; 104).

3. Système de transfert selon la revendication 1 ou 2, **caractérisé en ce que** le dispositif de transfert (130) comporte une plateforme de réception (132) sur laquelle s'accumulent lesdits un ou plusieurs produits (102 ; 104) provenant de la zone d'entrée (116).

4. Système de transfert selon la revendication 3, **caractérisé en ce que** le dispositif d'évacuation (170) comporte une plateforme d'évacuation (172) s'étendant à un troisième niveau de déchargement (N3), la plateforme de réception (132) étant configurée pour pouvoir se positionner alternativement au-dessus et au-dessous dudit troisième niveau de déchargement (N3).

5. Système de transfert selon la revendication 4, **caractérisé en ce que** la plateforme de réception (132) est formée d'une pluralité de premiers éléments longitudinaux (140) et **en ce que** la plateforme d'évacuation (172) est formée d'une pluralité de deuxièmes éléments longitudinaux (174), les premiers éléments longitudinaux (140) étant configurés pour pouvoir passer entre les deuxièmes éléments longitudinaux (174) lorsque la plateforme de réception (132) passe alternativement au-dessus et au-dessous du troisième niveau de déchargement (N3).

6. Système de transfert selon l'une quelconque des revendications précédentes, **caractérisé en ce que** le dispositif de transfert (130) comporte au moins un élément de blocage (134) formant une butée pour les produits (102 ; 104) s'accumulant sur le dispositif de transfert (130).

7. Système de transfert selon l'une quelconque des revendications précédentes, **caractérisé en ce que** le dispositif de transfert (130) est mis en mouvement au moyen de deux robots (146a, 146b) positionnés de part et d'autre du dispositif de transfert (130).

8. Système de transfert selon l'une quelconque des revendications précédentes, **caractérisé en ce qu'**il comprend en outre un dispositif d'acheminement (118) des produits (102 ; 104) depuis une zone de fabrication (112) vers la zone d'entrée (116).

9. Système de transfert selon l'une quelconque des revendications précédentes avec rattachement à la revendication 3, comportant un dispositif de transition (150) agencé pour déposer les produits (104a-d) sur la plateforme de réception (132), ledit dispositif de transition (150) comportant une pluralité de quatrième éléments longitudinaux (158) parallèles les uns aux autres, lesdits quatrième éléments longitudinaux comportant une extrémité libre (162) et une extrémité opposée (164) sur laquelle les produits (104a-d) viennent en appui lors de leur acheminement vers la plateforme de réception (132).

10. Procédé de transfert de produits depuis une zone d'entrée vers une zone de stockage desdits produits, ledit procédé étant mis en oeuvre au moyen du système de transfert (110) selon l'une quelconque des revendications 1 à 8 et étant **caractérisé en ce qu'**il comprend au moins les étapes suivantes :
- placer le dispositif de transfert (130) au premier niveau de réception (N1) et transférer un ou plusieurs produits (102 ; 104) de la zone d'entrée (116) vers le dispositif de transfert (130) pour former un premier ensemble de produits (106),
- placer le dispositif de transfert (130) au deuxième niveau de transfert (N2) et transférer le premier ensemble de produits (106) sur le dispositif d'évacuation (170),
- replacer le dispositif de transfert (130) au premier niveau de réception (N1) tout en poursuivant le transfert d'un ou plusieurs produits (102 ; 104) de la zone d'entrée (116) vers le premier ensemble (106) de manière à former un ensemble final (108), et
- évacuer l'ensemble final (108) vers une deuxième zone de stockage (114) une fois que le dispositif de transfert (130) s'est replacé au premier niveau de réception (N1).

11. Procéder selon la revendication 9, caractériser en ce qu'il comporte l'étape d'acheminer les produits (102 ; 104) depuis une zone de fabrication (112) vers la zone d'entrée (116).
